# EUROPÄISCHE PATENTSCHRIFT

(11) **EP 2 129 932 B1**
(45) Veröffentlichungstag und Bekanntmachung des Hinweises auf die Patenterteilung: **14.03.2012**
(21) Anmeldenummer: 08716644.3
(22) Anmeldetag: 20.03.2008
(51) Int. Cl.: F16F 9/38, F16J 3/04

(54) **SCHUTZHÜLLE FÜR EIN KOLBEN-ZYLINDERAGGREGAT**
PROTECTIVE SLEEVE FOR A PISTON-CYLINDER UNIT
ENVELOPPE DE PROTECTION POUR UN ENSEMBLE CYLINDRE-PISTON

(30) Priorität: 03.04.2007 DE 102007015860
(43) Veröffentlichungstag der Anmeldung: 09.12.2009
(73) Patentinhaber: ZF Friedrichshafen AG, 88038 Friedrichshafen (DE)
(72) Erfinder: SCHULER, Manfred, 97456 Dittelbrunn/Hambach (DE); STRETZ, Klaus, 97437 Hassfurt (DE); RENN, Josef, 97337 Dettelbach (DE); MARQUAR, Hendrik, 97422 Schweinfurt (DE)
(86) Internationale Anmeldenummer: PCT/EP2008/002228
(87) Internationale Veröffentlichungsnummer: WO 2008/119472

(56) Entgegenhaltungen:
- EP-A- 1 048 865
- DE-A1- 4 307 445
- DE-A1- 10 200 608
- FR-A- 2 881 501
- US-A1- 2006 012 089

## Beschreibung

### Technisches Gebiet

Die Erfindung betrifft eine Schutzhülle für ein Kolben-Zylinderaggregat gemäß dem Oberbegriff von Patentanspruch 1.

### Stand der Technik

Die DE 102 00 608 A1 betrifft einen Faltenbalg für ein teleskopierbares Kolben-Zylinderaggregat. Das Kolben-Zylinderaggregat umfasst einen Zylinder, in der eine Kolbenstange axial beweglich geführt ist. Ortsfest zum Zylinder und zur Kolbenstange sind die Enden eines schlauchförmigen Faltenbalgs angeordnet. Als Fixierstelle am Zylinder dient der äußere Rand eines Federtellers für eine Fahrzeugtragfeder. Kolbenstangenseitig ist ebenfalls ein Federteller befestigt, auf dessen Rückseite das andere Faltenbalgende verspannt ist. Als Material für einen derartigen Faltenbalg wird beispielsweise Polypropylen mit Ehtylen-Propylen-Kautschuk verwendet, das hermetisch dicht ist. Bei einer Kompressionsbewegung, d. h. die Kolbenstange fährt in den Zylinder ein, wird ein vom Schutzbalg und von der Kolbenstange definierter Ringraum axial verkleinert. Durch spezielle Belüftungsöffnungen im Federteller wird ein Aufblähen des Faltenbalgs verhindert. Der konstruktive Aufwand spricht jedoch gegen diese Lösung, die sich bisher nicht durchsetzen konnte.

Aus der DE 43 07 445 A1, der FR 2 881 501 oder der EP 1 048 865 A1 ist es bekannt, kleinere Oberflächenbereiche des Schutzbalgs mit einem gasdurchlässigen Einsatz auszuführen.

### Darstellung der Erfindung

Die Aufgabe der Erfindung besteht darin, einen Schutzbalg für ein Kolben-Zylinderaggregat dahingehend weiterzuentwickeln, dass einerseits eine einwandfreie Dichtfunktion gewährleistet ist und andererseits auf eine aufwändige Belüftungstechnik verzichtet werden kann.

Erfindungsgemäß wird die Aufgabe durch die Merkmale des Patentanspruchs 1 gelöst.

Die Fadenstruktur folgt einem Muster, das jedoch auf verschiedene Arten hergestellt sein kann. Man kann eine Maschenstruktur vorsehen, ähnlich wie sie beim Stricken erzeugt wird. Für eine derartige Fadenstruktur benötigt man nur einen einzigen Faden. Alternativ besteht auch die Möglichkeit, dass die Fadenstruktur als Gewebe ausgeführt ist mit mindestens zwei sich kreuzenden Fäden. Als Werkstoffgruppe für die Fadenstruktur wird auf Polyolefine und Polyester verwiesen. Durch Wärmezufuhr kann die Gestalt der Schutzhülle nachträglich angepasst werden.

Des Weiteren kann vorgesehen sein, dass die Schutzhülle aus mehreren Streifen besteht, die durch Nähte zur Schutzhülle zusammengefasst sind. Diese Technik erlaubt eine räumlich ausgeprägt unsymmetrische Ausgestaltung der Schutzhülle, ohne dass an der Fadenstruktur Veränderungen vorgenommen werden müssen. Durch die Verwendung eines elastischen Fadenmaterials aber auch durch die Formgebung der Fadenstruktur ist die Schutzhülle zumindest in Achsrichtung des Kolben-Zylinderaggregats elastisch.

Man kann auch vorsehen, dass die Schutzhülle transparent ist. Diese Möglichkeit erlaubt die Sichtkontrolle des Kolben-Zylinderaggregats z. B. im Rahmen einer Inspektion.

Die Schutzhülle soll sich nicht undefiniert zu dem Kolben-Zylinderaggregat bewegen können, insbesondere nicht wenn das Kolben-Zylinderaggregat als Schwingungsdämpfer einer hochfrequenten Anregung ausgesetzt ist, so dass die Schutzhülle häufig von dem Zylinder abheben würde. Deshalb ist an dem Kolben-Zylinderaggregat ein ringförmiges Anbauteil fixiert, an dem die Schutzhülle fixiert ist.

Als weitere Maßnahme ist die Schutzhülle an den Enden jeweils in beiden Richtungen axial fixiert.

### Kurze Beschreibung der Zeichnungen

Anhand der folgenden Figurenbeschreibung soll die Erfindung näher erläutert werden.

### Bester Weg zur Ausführung der Erfindung

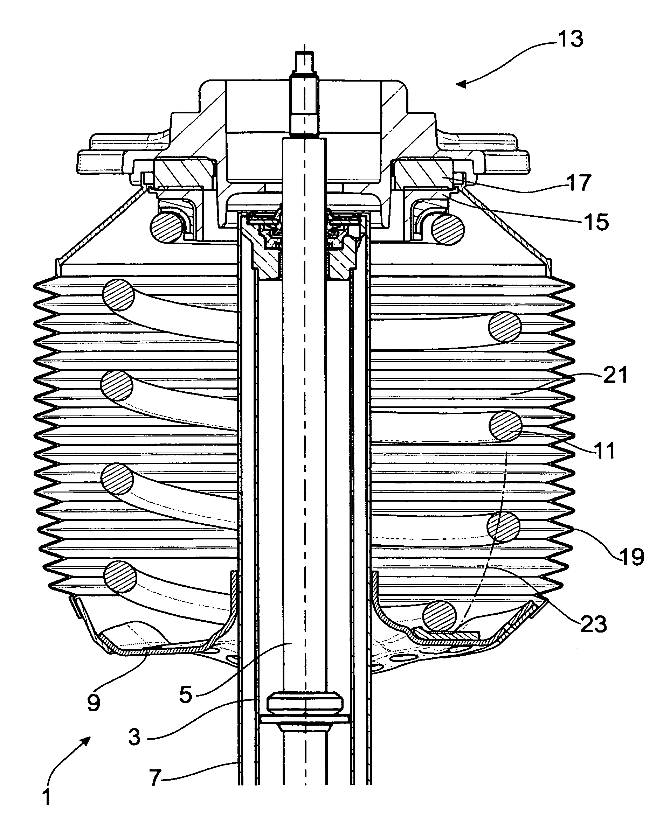

Die einzige Figur zeigt einen Ausschnitt aus einem Kolben-Zylinderaggregat 1 in der Bauform eines Federbeins für ein Kraftfahrzeugfahrwerk, wobei die Erfindung allgemein bei Kolben-Zylinderaggregaten anwendbar ist und sich nicht auf den dargestellten Anwendungsfall beschränkt.

Das Kolben-Zylinderaggregat 1 umfasst einen Zylinder 3, in dem eine Kolbenstange 5 axial beweglich geführt ist. Konzentrisch zu dem Zylinder ist ein Behälterrohr angeordnet, an dem ein ringförmiges Anbauteil in Form eines Federtellers 9 für eine Fahrzeugtragfeder 11 befestigt ist.

Ortsfest zur Kolbenstange 5 ist ein Anschlusslager 13 für eine Anbindung an einen Fahrzeugaufbau montiert. Das Anschlusslager 13 umfasst einen zweiten Federteller 15 für das andere Ende der Fahrzeugtragfeder 11. Des Weiteren kann das Anschlusslager ein Drehlager 17 für eine rotatorische Relativbewegung des zweiten Federtellers 15 zum Anschlusslager 13 bzw. zur Kolbenstange 5 aufweisen.

Der gesamte Abschnitt zwischen dem Anschlusslager 13 und dem behälterrohrseitigen Federteller 9 wird von einer sich außerhalb der Tragfeder 11 erstreckenden Schutzhülle umschlossen, so dass zwischen der Schutzhülle 19 und der Kolbenstange 5 ein Ringraum 21 vorliegt, der bei einer Axialbewegung der Kolbenstange einer Volumenänderung unterliegt. Diese Volumenänderung erfordert einen Luftaustausch, der dadurch gewährleistet wird, dass die Schutzhülle eine gasdurchlässige Fadenstruktur aufweist. Die Fadenstruktur kann als Gewebe aus einem oder mehreren Fäden erzeugt werden. Innerhalb der Fadenstruktur liegt eine Vielzahl von kleinsten Öffnungen vor, die zwar den Gasaustausch zulassen, jedoch Schmutz und Feuchtigkeit vom Ringraum 21 abhalten. Des Weiteren ermöglichen die Öffnungen eine Verdrehbewegung zwischen den beiden Enden der Schutzhülle aus, die z. B. bei einer Lenkbewegung eines Federbeins als Relativbewegung zwischen dem Behälterrohr 7 und dem Anschlusslager 13 auftritt. Auch axiale Längenänderungen der Schutzhülle werden von der Fadenstruktur aufgenommen.

Die Schutzhülle kann aus mehrere Streifen bestehen, deren Nähte 23 durch die Strichpunktierung dargestellt werden soll. Die axial verlaufenden Streifen sind zu einer rohrförmigen Hülle zusammengefasst, aber auch eine nahtlose Ausführung ist möglich.

Zumindest in Achsrichtung des Kolben-Zylinderaggregats kann die Schutzhülle elastisch ausgeführt sein. Zum einen kann man elastisches Fadenmaterial verwenden oder eine bedingt durch die Fadenstruktur erzeugte Elastizität erreichen. Man kann auch transparente Fadenmaterialien vorsehen, um z. B. den besagten Ringraum 21 kontrollieren zu können.

Die Schutzhülle ist, wenn man die maximale Schutzwirkung erreichen will, an ihren beiden Enden axial fixiert, um keine Schmutz aufnehmenden Öffnungen zuzulassen. Die Fixierung kann z. B. durch eine Klebung an den Federtellern 9; 13 erfolgen, aber auch dadurch, dass die Fadenstruktur aus einem schrumpffähigen Material besteht. Am Beispiel des behälterrohrseitigen Federtellers 9 ist erkennbar, dass sich die Schutzhülle 19 durch Wärmeeinwirkung an der Ober- und Unterseite randseitig radial einzieht und eine doppeltwirkende Formschlussverbindung mit dem Federteller 9 eingeht.

## Patentansprüche

1. Kolben-Zylinderaggregat, umfassend einen Zylinder, in dem eine Kolbenstange axial beweglich geführt ist, wobei der außerhalb des Zylinders befindliche Abschnitt der Kolbenstange und eine die Kolbenstange einschließende Schutzhülle einen Ringraum bestimmen, der über mindestens eine Luftaustauschverbindung an die Umgebung angeschlossen ist, wobei die Schutzhülle (11)
eine gasdurchlässige Fadenstruktur aufweist **dadurch gekennzeichnet, dass** die Schutzhülle (11) aus einem schrumpffähigen Material besteht.

2. Kolben-Zylinderaggregat nach Anspruch 1,
**dadurch gekennzeichnet,**
**dass** die Fadenstruktur als Gewebe ausgeführt ist.

3. Kolben-Zylinderaggregat nach Anspruch 1,
**dadurch gekennzeichnet,**
**dass** die Schutzhülle (11) aus mehreren Streifen besteht, die über Nähte (23) zur Schutzhülle zusammengefasst sind.

4. Kolben-Zylinderaggregat nach Anspruch 1,
**dadurch gekennzeichnet,**
**dass** die Schutzhülle (11) zumindest in Achsrichtung des Kolben-Zylinderaggregats (1) elastisch ist.

5. Kolben-Zylinderaggregat nach Anspruch 1,
**dadurch gekennzeichnet,**
**dass** die Schutzhülle (11) transparent ist.

6. Kolben-Zylinderaggregat nach Anspruch 1,
**dadurch gekennzeichnet,**
**dass** die Schutzhülle (11) an einem ringförmigen Anbauteil (9) des Kolben-Zylinderaggregats (1) fixiert ist.

7. Kolben-Zylinderaggregat nach Anspruch 6,
**dadurch gekennzeichnet,**
**dass** die Schutzhülle (11) an den Enden jeweils in beiden Richtungen axial fixiert ist.

## Claims

1. Piston-cylinder unit, comprising a cylinder in which a piston rod is guided in an axially moveable manner, wherein that section of the piston rod which is located outside the cylinder and a protective sleeve enclosing the piston rod determine an annular space which is connected to the surroundings via at least one air exchange connection, wherein the protective sleeve (19) has a gas-permeable thread structure, **characterized in that** the protective sleeve (19) is composed of a shrinkable material.

2. Piston-cylinder unit according to Claim 1, **characterized in that** the thread structure is designed as a fabric.

3. Piston-cylinder unit according to Claim 1, **characterized in that** the protective sleeve (19) comprises a plurality of strips which are combined via seams (23) to form the protective sleeve.

4. Piston-cylinder unit according to Claim 1, **characterized in that** the protective sleeve (19) is elastic at least in the axial direction of the piston-cylinder unit (1).

5. Piston-cylinder unit according to Claim 1, **characterized in that** the protective sleeve (19) is transparent.

6. Piston-cylinder unit according to Claim 1, **characterized in that** the protective sleeve (19) is fixed to an annular add-on part (9) of the piston-cylinder unit (1).

7. Piston-cylinder unit according to Claim 6, **characterized in that** the ends of the protective sleeve (19) in both directions are fixed axially.

## Revendications

1. Unité cylindre-piston, comprenant un cylindre dans lequel est guidée une tige de piston de manière déplaçable axialement, la portion de la tige de piston se trouvant en dehors du cylindre et une enveloppe de protection incluant la tige de piston définissant un espace annulaire qui est raccordé à l'environnement par le biais d'au moins une connexion à échange d'air, l'enveloppe de protection (19) présentant une structure en fils perméable aux gaz, **caractérisée en ce que** l'enveloppe de protection (19) se compose d'un matériau rétractable.

2. Unité cylindre-piston selon la revendication 1,
**caractérisée en ce que**
la structure en fils est réalisée sous forme de tissu.

3. Unité cylindre-piston selon la revendication 1,
**caractérisée en ce que**
l'enveloppe de protection (19) se compose de plusieurs rubans qui sont réunis par des coutures (23) pour former l'enveloppe de protection.

4. Unité cylindre-piston selon la revendication 1,
**caractérisée en ce que**
l'enveloppe de protection (19) est élastique au moins dans la direction axiale de l'unité cylindre-piston (1).

5. Unité cylindre-piston selon la revendication 1,
**caractérisée en ce que**
l'enveloppe de protection (19) est transparente.

6. Unité cylindre-piston selon la revendication 1,
**caractérisée en ce que**
l'enveloppe de protection (19) est fixée sur une partie rapportée de forme annulaire (9) de l'unité cylindre-piston (1).

7. Unité cylindre-piston selon la revendication 6,
**caractérisée en ce que**
l'enveloppe de protection (19) est fixée axialement aux extrémités à chaque fois dans les deux directions.
